# EUROPÄISCHE PATENTSCHRIFT

(11) **EP 0 457 732 B1**
(45) Veröffentlichungstag und Bekanntmachung des Hinweises auf die Patenterteilung: **01.03.1995**
(21) Anmeldenummer: 91810361.5
(22) Anmeldetag: 10.05.1991
(51) Int. Cl.: C08F 222/40, C08G 73/12

(54) **Neue härtbare Zusammensetzungen**
Curable compositions
Compositions durcissables

(30) Priorität: 18.05.1990 CH 1702/90
(43) Veröffentlichungstag der Anmeldung: 21.11.1991
(73) Patentinhaber: CIBA-GEIGY AG, 4002 Basel (CH)
(72) Erfinder: Kramer, Andreas, Dr., CH-3186 Düdingen (CH); Brunner, Rudolf, Dr., CH-1782 Belfaux (CH); Zahir, Sheik Abdul-Cader, Dr., CH-4104 Oberwil (CH)

(56) Entgegenhaltungen:
- EP-A- 0 014 816
- EP-A- 0 253 600
- EP-A- 0 321 155

## Beschreibung

Die vorliegende Erfindung betrifft Zusammensetzungen enthaltend Bismaleinimide und 2,6-Dialkyl-4-allylphenole oder 2,6-Dialkyl-4-allylphenolallylether sowie Verfahren zur Herstellung gehärteter Produkte unter Verwendung der erfindungsgemässen Zusammensetzungen.

Allgemein bekannt sind dem Fachmann Zusammensetzungen auf der Basis von Bismaleinimiden und Alkenylphenolen. Als Beispiele für solche Bismaleinimidsysteme sind das US-Patent 4,100,140 und das US-Patent 4,288,583 anzuführen. Die bekannten härtbaren Gemische genügen jedoch nicht in jeder Hinsicht den hohen Anforderungen, zum Beispiel an die Verarbeitbarkeit, da sie im allgemeinen selbst bei der Verarbeitungstemperatur hochviskose Gemische darstellen. Ausserdem neigen die Bismaleinimide dazu, in solchen Systemen auszukristallisieren.

Es wurde nun gefunden, dass mit 2,6-Dialkyl-4-allylphenol oder 2,6-Dialkyl-4-allylphenolallylether modifizierte Bismaleinimidsysteme eine signifikant tiefere Systemviskosität aufweisen, was für die Verarbeitung von Vorteil ist. Solche Zusammensetzungen weisen bei erhöhter Temperatur längere, also günstigere Verarbeitungszeiten (pot life) auf. Es wurde ferner gefunden, dass die Zusammensetzungen bei der Verarbeitungstemperatur (80-130 °C) wie auch bei Raumtemperatur stabil sind, d.h. das Bismaleinimid kristallisiert nicht aus. Überraschenderweise wird nun aber auch noch eine signifikant höhere Glasumwandlungstemperatur der auf den erfindungsgemässen Zusammensetzungen basierenden, gehärteten Produkte festgestellt.

Gegenstand der vorliegenden Erfindung sind somit Zusammensetzungen enthaltend
A) Verbindungen der Formel I 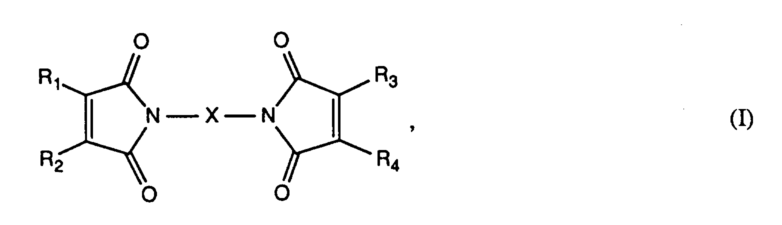 worin R₁, R₂, R₃ und R₄ gleich oder verschieden sind und jeweils Wasserstoff oder Methyl bedeuten und X einen zweiwertigen organischen Rest mit 2 bis 60 C-Atomen darstellt und
B) Verbindungen der Formel II 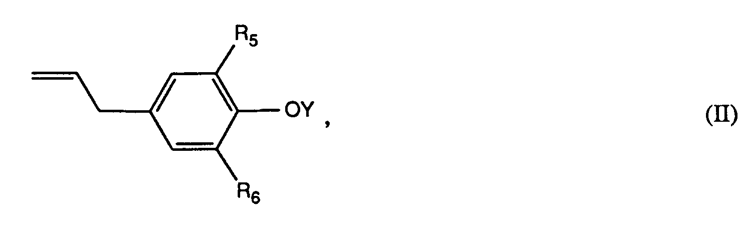 worin R₅ und R₆ gleich oder verschieden sind und unabhängig voneinander C₁-C₈-Alkyl bedeuten und Y für Wasserstoff oder einen Allylrest steht.

Die Bismaleinimide der Formel I sind bekannte Verbindungen und sind beispielsweise in der US-PS 4,100,140 beschrieben. Vorzugsweise handelt es sich um Verbindungen der Formel I, worin X -(CH₂)ₚ- mit p = 2-20, Phenylen, Xylylen, Naphthylen, Cyclopentylen, 1,5,5-Trimethylcyclohexylen-1,3; Cyclohexylen-1,4; 1,4-Bis(methylen)cyclohexylen, den Rest des 4,4'-Bicyclohexylmethans oder eine Gruppe der Formel III 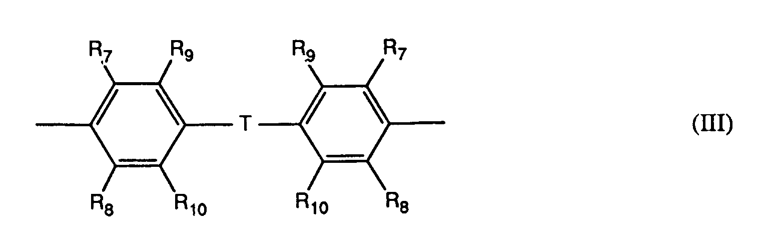
bedeutet, worin R₇ und R₈ gleich oder verschieden sind und jeweils Wasserstoff oder C₁-C₄-Alkyl bedeuten, R₉ und R₁₀ unabhängig voneinander je für ein Wasserstoff- oder Halogenatom stehen und T Methylen, 2,2-Propyliden, -CO-, -O-, -S- oder -SO₂- darstellt. Ausserdem bevorzugt sind Verbindungen der Formel I, worin R₁, R₂, R₃ und R₄ Wasserstoff sind.

Besonders bevorzugt sind Verbindungen der Formel I, worin X Hexamethylen, Trimethylhexamethylen, 1,5,5-Trimethylcyclohexylen-1,3; der Rest des 4,4'-Bicyclohexylmethans oder ein Gruppe der Formel III ist, wobei T Methylen, 2,2-Propyliden, -O- oder -S- ist.

Insbesondere verwendet man Verbindungen der Formel I, worin R₁, R₂, R₃ und R₄ Wasserstoff sind und X eine Gruppe der Formel III darstellt, wobei R₇ und R₈ gleich oder verschieden sind und jeweils Wasserstoff, Methyl oder Ethyl bedeuten, R₉ und R₁₀ Wasserstoff sind und T Methylen ist.

Natürlich können auch Mischungen von zwei oder mehr verschiedenen Bismaleinimiden zum Einsatz kommen. Bevorzugt sind Mischungen des N,N'-4,4'-Diphenylmethan-bis-maleinimid mit Verbindungen der Formel I, worin R₁, R₂, R₃ und R₄ Wasserstoff sind und X eine Gruppe der Formel III darstellt, wobei R₇ und R₈ gleich oder verschieden sind und jeweils Methyl oder Ethyl bedeuten, R₉ und R₁₀ Wasserstoff sind und T Methylen ist. Das Molverhältnis der unsubstituierten zu den substituierten Bismaleinimide liegt hierbei vorzugsweise von 1 : 0,8 bis 1,2.

Beispiele für Bismaleinimide der Formel I sind: N,N'-Ethylen-bismaleinimid, N,N'-Hexamethylen-bismaleinimid, N,N'-Trimethylhexylen-bismaleinimid, N,N'-m-Phenylen-bismaleinimid, N,N'-4,4'-Diphenylmethan-bismaleinimid, N,N'-4,4'-Diphenylether-bismaleinimid, N,N'-(1,5,5-Trimethylcyclohexylen-1,3)-bismaleinimid, N,N'-4,4'-Dicyclohexylmethan-bismaleinimid, N,N'-p-Xylylen-bismaleinimid, N,N'-4,4'-Di-(2-ethyl-6-methylphenyl)-methan-bismaleinimid, N,N'-4,4'-Di-(2,6-dimethylphenyl)-methan-bismaleinimid, N,N'-4,4'-Di-(2,6-diethylphenyl)-methan-bismaleinimid, N,N'-4,4'-Di-(2,6-diisopropylphenyl)-methan-bismaleinimid, N,N'-4,4'-Di-(2-ethyl-6-isopropylphenyl)-methan-bismaleinimld und N,N'-4,4'-Di-(3-chlor-2,6-diethylphenyl)-methan-bismaleinimid.

Die Herstellung der Verbindungen gemäss Formel I ist bekannt und erfolgt beispielsweise durch Umsetzung des gegebenenfalls substituierten Maleinsäureanhydrids mit den entsprechenden Diaminen. Übliche Methoden sind in der GB-PS 1,137,592 beschrieben.

Die Verbindungen der Formel II stellen ebenfalls bekannte Verbindungen dar. Ihre Herstellung ist dem Fachmann allgemein bekannt. Die 2,6-Dialkyl-4-allylphenolallylether sind beispielsweise in Helv. Chem. Acta **56**,14 (1973) beschrieben.

Bevorzugt sind Verbindungen der Formel II, worin R₅ und R₆ Methyl bedeuten und Y für Wasserstoff oder einen Allylrest steht.

Beispiele für geeignete Phenole sind 2,6-Dimethyl-4-allylphenol, 2,6-Diethyl-4-allylphenol, 2,6-Dipropyl-4-allylphenol, 2,6-Diisopropyl-4-allylphenol, 2,6-Di-(1-methylpropyl)-4-allylphenol, 2,6-Diisobutyl-4-allylphenol und 2,6-Dihexyl-4-allylphenol sowie die Allylether dieser Verbindungen.

Im allgemeinen enthalten die erfindungsgemässen Zusammensetzungen pro Mol der Komponente A 0,027 bis 1,15 Mol, vorzugsweise 0,045 bis 0,9 Mol, der Komponente B.

Die erfindungsgemässen Gemische können weiterhin Alkenylphenole der Formeln IV, V oder VI enthalten: 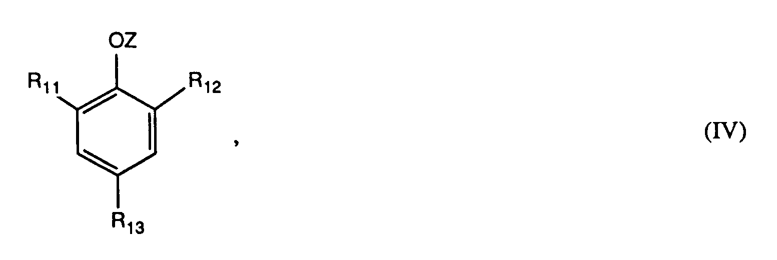
worin R₁₁, R₁₂ und R₁₃ unabhängig voneinander ein Wasserstoffatom oder ein C₃-C₁₀-Alkenyl bedeuten, wobei mindestens einer der Reste R₁₁ bis R₁₃ für eine Alkenylgruppe steht, und Z Wasserstoff, C₁-C₁₀-Alkyl, C₆-C₁₀-Aryl oder C₃-C₁₀-Alkenyl darstellt, 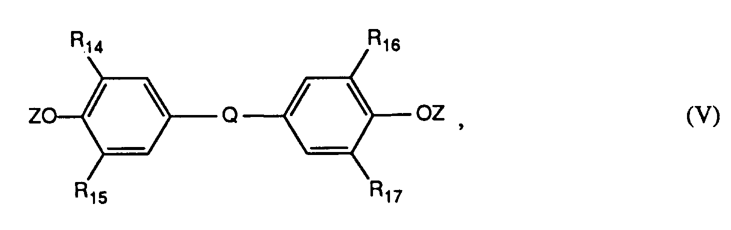
worin Q eine direkte Bindung, Methylen, 2,2-Propyliden, -CO-, -O-, -S-,-SO- oder -SO₂- und R₁₄, R₁₅, R₁₆ und R₁₇ unabhängig voneinander ein Wasserstoffatom oder ein C₃-C₁₀-Alkenyl bedeuten, wobei mindestens einer der Reste R₁₄ bis R₁₇ für eine Alkenylgruppe steht, und Z Wasserstoff, C₁-C₁₀-Alkyl, C₆-C₁₀-Aryl oder C₃-C₁₀-Alkenyl darstellt oder 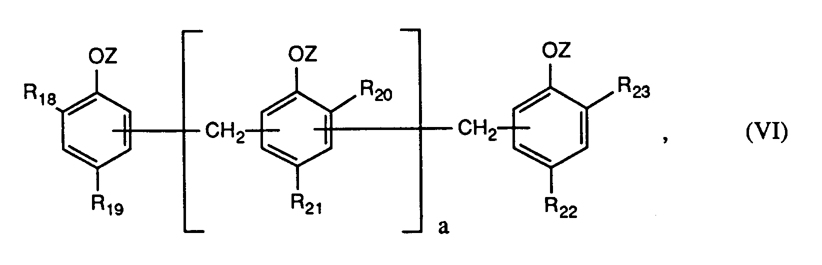
worin R₁₈, R₁₉, R₂₀, R₂₁, R₂₂ und R₂₃ unabhängig voneinander ein Wasserstoffatom, C₁-C₄-Alkyl oder C₃-C₁₀-Alkenyl bedeuten, wobei mindestens einer der Reste R₁₈ bis R₂₃ für eine Alkenylgruppe steht, und a eine Zahl von 0 bis 10 bedeutet, und Z Wasserstoff, C₁-C₁₀-Alkyl, C₆-C₁₀-Aryl oder C₃-C₁₀-Alkenyl darstellt.

Als Alkenylgruppe enthalten die Verbindungen der Formeln IV bis VI vorzugsweise ein Allyl, Methallyl oder 1-Propenyl.

Von den Verbindungen der Formeln IV bis VI werden in den erfindungsgemässen Zusammensetzungen bevorzugt Verbindungen der Formel V eingesetzt, worin Q für Methylen, 2,2-Propyliden, -O-, -S-,-CO- oder -SO₂- steht, R₁₄ und R₁₆ je ein Allyl und R₁₅ und R₁₇ je ein Wasserstoffatom bedeuten und Z Wasserstoff darstellt.

Besonders bevorzugt sind Alkenylphenole der Formel V, worin Q für 2,2-Propyliden steht, R₁₄ und R₁₆ je ein Allyl und R₁₅ und R₁₇ je ein Wasserstoffatom bedeuten und Z Wasserstoff darstellt.

Die erfindungsgemässen Zusammensetzungen enthalten im allgemeinen pro Mol Alkenylphenol 0,1 bis 2 Mol, bevorzugt 0,2 bis 0,5 Mol, der Komponente B.

Beispiele für alkenylsubstituierte Phenole und Polyole sind beispielsweise o,o'-Diallylbisphenol A, 4,4'-Dihydroxy-3,3'-diallylbiphenyl, Bis-(4-hydroxy-3-allylphenyl)methan, 2,2-Bis-(4-hydroxy-3,5-diallylphenyl)propan, Eugenol (4-Allyl-2-methoxyphenol), o,o'-Dimethallylbisphenol A, 4,4'-Dihydroxy-3,3'-dimethallylbiphenyl, Bis-(4-hydroxy-3-methallylphenyl)methan, 2,2-Bis-(4-hydroxy-3,5-dimethallylphenyl)propan, 4-Methallyl-2-methoxyphenol, 2,2-Bis-(4-methoxy-3-allylphenyl)propan, 2,2-Bis-(4-methoxy-3-methallylphenyl)propan, 4,4'-Dimethoxy-3,3'-diallylbiphenyl, 4,4'-Dimethoxy-3,3'-dimethallylbiphenyl, Bis-(4-methoxy-3-allylphenyl)methan, Bis-(4-methoxy-3-methallylphenyl)methan, 2,2-Bis-(4-methoxy-3,5-diallylphenyl)propan, 2,2-Bis-(4-methoxy-3,5-dimethallylphenyl)propan, 4-Allylveratrol (4-Allyl-1,2-Dimethoxybenzol) und 4-Methallylveratrol (4-Methallyl-1,2-Dimethoxybenzol).

Die Herstellung der Alkenylphenole ist bekannt und erfolgt beispielsweise durch Umsetzung der entsprechenden Phenole und z.B. Allylchlorid in Anwesenheit eines Alkalimetallhydroxids in einem geeigneten Lösungsmittel, wobei die erhaltenen Produkte anschliessend einer Claisenumlagerung unterworfen werden. Methoden dieser Art sind z.B. in der US-PS 4,100,140 und der US-PS 4,288,583 beschrieben.

Die erfindungsgemässen Zusammensetzungen können durch blosses Zusammenmischen der Komponenten oder durch Erhitzen der Zusammensetzung bei 75 bis 140°C während etwa 15 bis 60 Minuten hergestellt werden. Um die Umsetzung zu erleichtern, können auch gegebenenfalls Lösungsmittel, besonders flüchtige Lösungsmittel, wie chlorierte Kohlenwasserstoffe, Ester, Etheralkohole oder Tetrahydrofuran eingesetzt werden. Das Lösungsmittel wird nach der Umsetzung entfernt.

Die Härtung der erfindungsgemässen Zusammensetzungen erfolgt im allgemeinen bei Temperaturen zwischen 100 und 300 °C während einer für die Härtung ausreichenden Zeit.

Während der Härtung entsteht ein Netzwerk mit hoher Vernetzungdichte. Der hier verwendete Ausdruck Härtung bedeutet daher die Umwandlung der niederviskosen Harzmischungen in unlösliche und nichtschmelzbare vernetzte Produkte. Es können so Hochleistungswerkstoffe hergestellt werden, wie z.B. faserverstärkte Verbundwerkstoffe, Strukturklebstoffe, Laminier- oder Elektroharze, die hohen Temperaturen ausgesetzt werden können.

Die erfindungsgemässen Zusammensetzung können in jeder Verarbeitungsphase vor der Härtung mit den üblichen Modifizierungsmitteln vermischt werden, wie z.B. Streckmittel, Füllstoffe und Verstärkungsmittel, Pigmente, Farbstoffe, organische Lösungsmittel, Plastifizierungsmittel, Mittel zur Verbesserung der Trockenklebrigkeit (Klebrigmacher), Gummis oder Beschleuniger. Als Streckmittel, Verstärkungsmittel, Füllstoffe und Pigmente kommen z.B. in Frage: Kohleteer, Bitumen, Glasfasern Borfasern, Kohlefasern, Cellulose, Polyethylenpulver, Polypropylenpulver, Glimmer, Asbest, Quarzpulver, Gips, Antimontrioxid, Bentone, Siliziumdioxidaerogel ("Aerosil"), Lithopon, Barit, Titandioxid, Russ, Graphit, Eisenoxid oder Metallpulver wie z.B. Aluminium- oder Eisenpulver. Die härtbaren Gemische können auch andere übliche Zusätze, wie z.B. Flammschutzmittel, Thixotropiemittel, Verlaufsmittel wie Silicone, Celluloseacetatbutyrat, Polyvinylbutyrat, Wachse, Stearate und ähnliches (welche zum Teil auch als Formtrennmittel verwendet werden) beigegeben werden.

Die härtbaren Zusammensetzungen können auf übliche Art unter Verwendung bekannter Mischaggregate, wie Rührer, Kneter, Walzkörper und ähnliches, herstellt werden.

Die erfindungsgemässen Zusammensetzungen zeichnen sich durch eine sehr gute Verarbeitbarkeit, gute Löslichkeit in üblichen organischen Lösungsmitteln, gute Stabilität in der Schmelze oder in Lösung sowie durch gute thermische und mechanische Eigenschaften der gehärteten Produkte aus. Die erhaltenen Produkte weisen ebenfalls gute elektrische Eigenschaften auf, haben hohe Glasumwandlungstemperaturen und sind nicht brüchig. Die erfindungsgemässen Zusammensetzungen können auch problemlos als Schmelze, z.B. für die Imprägnierung, verwendet werden.

Gegenstand der vorliegenden Erfindung ist daher auch ein Verfahren zur Herstellung gehärteter Produkte unter Verwendung der erfindungsgemässen Zusammensetzungen.

Die beschriebenen erfindungsgemässen Zusammensetzungen können auf verschiedenen Gebieten eingesetzt werden, wie z.B. in Prepregs, Laminaten, Verbundwerkstoffen, Leiterplatten, Giesslingen, Formkörpern, Klebstoffen und Ueberzügen. Von besonderem Interesse ist ihre Anwendung für die Herstellung von faserverstärkten Verbundwerkstoffen, welche in der Luftfahrtindustrie sehr wichtig sind. So können die modifizierten Harze zum Präimprägnieren von verschiedenem faserartigem Material verwendet werden, welches als Deckschicht für Honigwabenstrukturen oder als Strukturteile eingesetzt wird. Verfahren zur Herstellung von Prepregs sind dem Fachmann bekannt. Als faserartige Materialien können z.B. Graphit, Glas und Kevlar verwendet werden. Auch Verfahren zur Herstellung von Laminaten sind bekannt. Laminate verschiedener Dicke können z.B. durch Pressformen oder Autoklavformen hergestellt werden. Die erfindungsgemässen Gemische können auch erfolgreich als haftvermittelnde Substanzen eingesetzt werden.

In den folgenden Beispielen sind einige bevorzugte Ausführungsformen der vorliegenden Erfindung beschrieben.

### Beispiel 1:

Eine Mischung aus 100 g N,N'-4,4'-Diphenylmethan-bismaleinimid, 65,4 g o,o'-Diallylbisphenol A und 10 g 2,6-Dimethyl-4-allylphenol wird bei 120-130 °C aufgeschmolzen. Man erhält eine homogene, bei Raumtemperatur hochviskose Mischung mit
η₁₀₀ = 190 mPa·s und einer Gelierzeit von 28 Minuten bei 160 °C.

Die bei 120 °C niederviskose Harzmasse wird in eine 4 mm dicke Metallform gegossen und 1 Stunde bei 180 °C, 2 Stunden bei 200 °C und 6 Stunden bei 250 °C gehärtet. Nach dem Abkühlen zerschneidet man die transparente Polymerplatte zu Prüfstäben, an denen folgende Eigenschaften gemessen werden:

| | |
|---|---|
| T_{g onset}: | 315 °C |
| Biegefestigkeit: (nach ISO 178) | 187 MPa |
| Randfaserdehnung: (nach ISO 178) | 7,2 % |

[T_{g onset} ist der Schnittpunkt der verlängerten Basislinie mit der Tangenten an die Messkurve im Bereich des steilsten Anstiegs (gemessen mit TMA, Mettler TA 3000)]

### Beispiel 2:

Eine Mischung aus 100 g N,N'-4,4'-Diphenylmethan-bismaleinimid, 56,0 g o,o'-Diallylbisphenol A und 12,4 g 2,6-Dimethyl-4-allylphenolallylether wird bei 120-130 °C aufgeschmolzen. Man erhält eine homogene, bei Raumtemperatur hochviskose Mischung mit
η₁₀₀ = 140 mPa·s und einer Gelierzeit von 31 Minuten bei 160 °C.

Die bei 120 °C niederviskose Harzmasse wird in eine 4 mm dicke Metallform gegossen und 1 Stunde bei 180 °C, 2 Stunden bei 200 °C und 6 Stunden bei 250 °C gehärtet. Nach dem Abkühlen zerschneidet man die transparente Polymerplatte zu Prüfstäben, an denen folgende Eigenschaften gemessen werden:

| | |
|---|---|
| T_{g onset}: | 317 °C |
| Biegefestigkeit: (nach ISO 178) | 166 MPa |
| Randfaserdehnung: (nach ISO 178) | 5,2 % |

### Beispiel 3:

Eine Mischung aus 100 g N,N'-4,4'-Diphenylmethan-bismaleinimid, 62,8 g o,o'-Diallylbisphenol A und 16,4 g 2,6-Dimethyl-4-allylphenolallylether wird bei 120-130 °C aufgeschmolzen. Man erhält eine homogene, bei Raumtemperatur hochviskose Mischung mit
η₁₀₀ = 90 mPa·s und einer Gelierzeit von 31 Minuten bei 160 °C.

Die bei 120 °C niederviskose Harzmasse wird in eine 4 mm dicke Metallform gegossen und 1 Stunde bei 180 °C, 2 Stunden bei 200 °C und 6 Stunden bei 250 °C gehärtet. Nach dem Abkühlen zerschneidet man die transparente Polymerplatte zu Prüfstäben, an denen folgende Eigenschaften gemessen werden:

| | |
|---|---|
| T_{g onset}: | 326 °C |
| Biegefestigkeit: (nach ISO 178) | 153 MPa |
| Randfaserdehnung: (nach ISO 178) | 5,2 % |

### Beispiel 4:

Eine Mischung aus 50 g N,N'-4,4'-Diphenylmethan-bismaleinimid, 50 g N,N'-4,4'-Di-(2-ethyl-6-methylphenyl)-methan-bismaleinimid, 58 g o,o'-Diallylbisphenol A und 10 g 2,6-Dimethyl-4-allylphenolallylether wird bei 120-130 °C aufgeschmolzen. Man erhält eine homogene, bei Raumtemperatur hochviskose Mischung mit η₁₀₀ = 200 mPa·s und einer Gelierzeit von 31 Minuten bei 160 °C.

Die bei 120 °C niederviskose Harzmasse wird in eine 4 mm dicke Metallform gegossen und 1 Stunde bei 180 °C, 2 Stunden bei 200 °C und 6 Stunden bei 250 °C gehärtet. Nach dem Abkühlen zerschneidet man die transparente Polymerplatte zu Prüfstäben, an denen folgende Eigenschaften gemessen werden:

| | |
|---|---|
| T_{g onset}: | 294 °C |
| Biegefestigkeit: (nach ISO 178) | 144 MPa |
| Randfaserdehnung: (nach ISO 178) | 4,8 % |

## Patentansprüche

1. Zusammensetzungen enthaltend
A) Verbindungen der Formel I 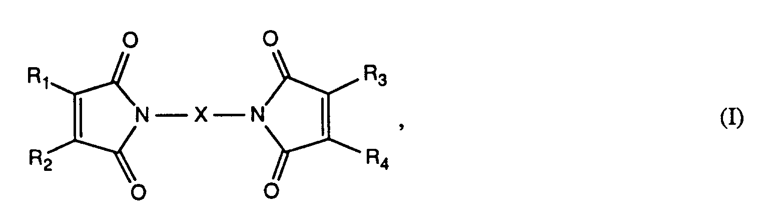 worin R₁, R₂, R₃ und R₄ gleich oder verschieden sind und jeweils Wasserstoff oder Methyl bedeuten und X einen zweiwertigen organischen Rest mit 2 bis 60 C-Atomen darstellt und
B) Verbindungen der Formel II 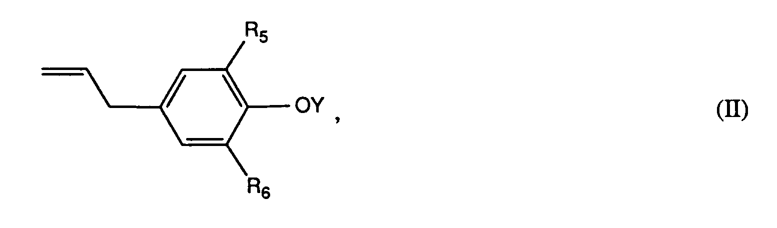 worin R₅ und R₆ gleich oder verschieden sind und unabhängig voneinander C₁-C₈-Alkyl bedeuten und Y für Wasserstoff oder einen Allylrest steht.

2. Zusammensetzungen gemäss Anspruch 1 enthaltend Verbindungen der Formel I, worin X -(CH₂)ₚ- mit p = 2-20, Phenylen, Xylylen, Naphthylen, Cyclopentylen, 1,5,5-Trimethylcyclohexylen-1,3; Cyclohexylen-1,4; 1,4-Bis(methylen)cyclohexylen, den Rest des 4,4'-Bicyclohexylmethans oder eine Gruppe der Formel III 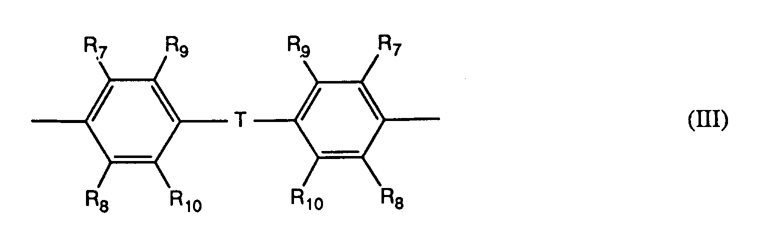 bedeutet, worin R₇ und R₈ gleich oder verschieden sind und jeweils Wasserstoff oder C₁-C₄-Alkyl bedeuten, R₉ und R₁₀ unabhängig voneinander je für ein Wasserstoff- oder Halogenatom stehen und T Methylen, 2,2-Propyliden, -CO-, -O-, -S- oder -SO₂- darstellt.

3. Zusammensetzungen gemäss Anspruch 1 enthaltend Verbindungen der Formel I, worin R₁, R₂, R₃ und R₄ Wasserstoff sind.

4. Zusammensetzungen gemäss Anspruch 1 enthaltend Verbindungen der Formel I, worin X Hexamethylen, Trimethylhexamethylen, 1,5,5-Trimethylcyclohexylen-1,3; der Rest des 4,4'-Bicyclohexylmethans oder ein Gruppe der Formel III ist, wobei T Methylen, 2,2-Propyliden, -O- oder -S- ist.

5. Zusammensetzungen gemäss Anspruch 1 enthaltend Verbindungen der Formel I, worin R₁, R₂, R₃ und R₄ Wasserstoff sind und X eine Gruppe der Formel III darstellt, wobei R₇ und R₈ gleich oder verschieden sind und jeweils Wasserstoff, Methyl oder Ethyl bedeuten, R₉ und R₁₀ Wasserstoff sind und T Methylen ist.

6. Zusammensetzungen gemäss Anspruch 1 enthaltend Verbindungen der Formel II, worin R₅ und R₆ Methyl bedeuten und Y für Wasserstoff oder einen Allylrest steht.

7. Zusammensetzungen gemäss Anspruch 1, worin pro Mol der Komponente A 0,027 bis 1,15 Mol, vorzugsweise 0,045 bis 0,9 Mol, der Komponente B enthalten ist.

8. Zusammensetzungen gemäss Anspruch 1 weiterhin enthaltend Alkenylphenole der Formeln IV, V oder VI 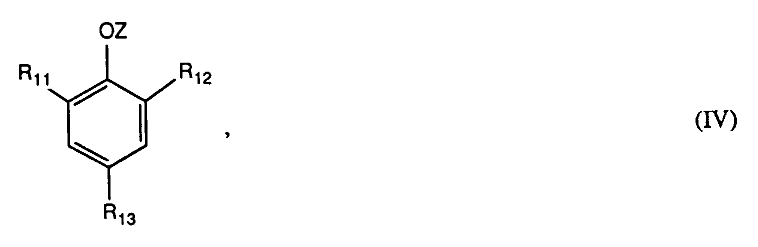 worin R₁₁, R₁₂ und R₁₃ unabhängig voneinander ein Wasserstoffatom oder ein C₃-C₁₀-Alkenyl bedeuten, wobei mindestens einer der Reste R₁₁ bis R₁₃ für eine Alkenylgruppe steht, und Z Wasserstoff, C₁-C₁₀-Alkyl, C₆-C₁₀-Aryl oder C₃-C₁₀-Alkenyl darstellt, 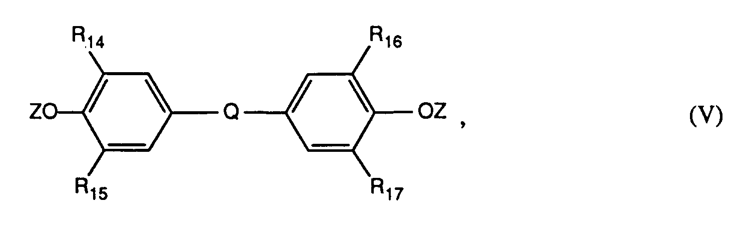 worin Q eine direkte Bindung, Methylen, 2,2-Propyliden, -CO-, -O-, -S-,-SO- oder -SO₂-und R₁₄, R₁₅, R₁₆ und R₁₇ unabhängig voneinander ein Wasserstoffatom oder ein C₃-C₁₀-Alkenyl bedeuten, wobei mindestens einer der Reste R₁₄ bis R₁₇ für eine Alkenylgruppe steht, und Z Wasserstoff, C₁-C₁₀-Alkyl, C₆-C₁₀-Aryl oder C₃-C₁₀-Alkenyl darstellt oder 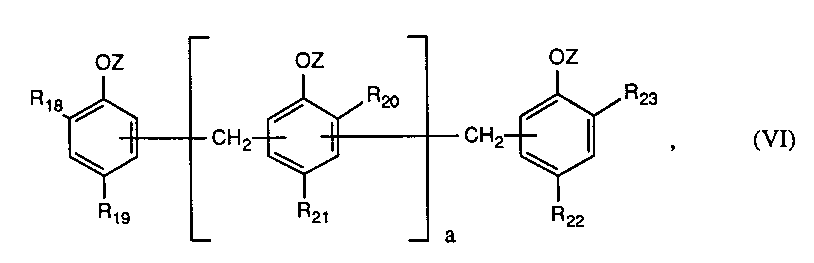 worin R₁₈, R₁₉, R₂₀, R₂₁, R₂₂ und R₂₃ unabhängig voneinander ein Wasserstoffatom, C₁-C₄-Alkyl oder C₃-C₁₀-Alkenyl bedeuten, wobei mindestens einer der Reste R₁₈ bis R₂₃ für eine Alkenylgruppe steht, und a eine Zahl von 0 bis 10 bedeutet, und Z Wasserstoff, C₁-C₁₀-Alkyl, C₆-C₁₀-Aryl oder C₃-C₁₀-Alkenyl darstellt.

9. Zusammensetzungen gemäss Anspruch 8, worin in den Formeln IV bis VI die Alkenylgruppe ein Allyl, Methallyl oder 1-Propenyl ist.

10. Zusammensetzungen gemäss Anspruch 8, enthaltend ein Alkenylphenol der Formel V, worin Q für Methylen, 2,2-Propyliden, -O-, -S-,-CO- oder -SO₂- steht, R₁₄ und R₁₆ je ein Allyl und R₁₅ und R₁₇ je ein Wasserstoffatom bedeuten und Z Wasserstoff darstellt.

11. Zusammensetzungen gemäss Anspruch 8, enthaltend Alkenylphenole der Formel V, worin Q für 2,2-Propyliden steht, R₁₄ und R₁₆ je ein Allyl und R₁₅ und R₁₇ je ein Wasserstoffatom bedeuten und Z Wasserstoff darstellt.

12. Zusammensetzungen gemäss Anspruch 8, worin pro Mol Alkenylphenol 0,1 bis 2 Mol, bevorzugt 0,2 bis 0,5 Mol, der Komponente B enthalten sind.

13. Verfahren zur Herstellung gehärteter Produkte unter Verwendung der Zusammensetzungen gemäss Anspruch 1.

## Claims

1. A composition comprising:
A) a compound of formula I 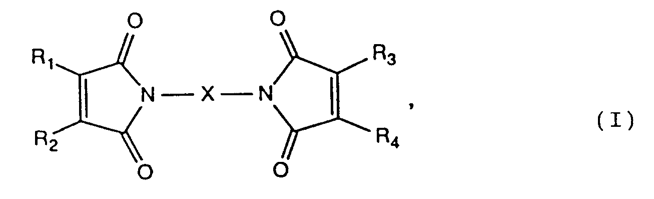 wherein R₁, R₂, R₃ and R₄ are identical or different and each is hydrogen or methyl, and X is a divalent organic radical comprising from 2 to 60 carbon atoms, and
B) a compound of formula II 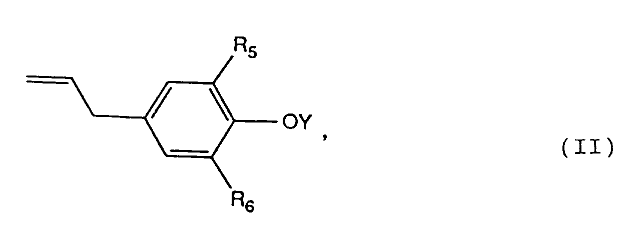 wherein R₅ and R₆ are identical or different and each, independently of the other, is C₁-C₈alkyl, and Y is hydrogen or an allyl radical.

2. A composition according to claim 1 comprising a compound of formula I wherein X is -(CH₂)ₚ-, with p = from 2 to 20, phenylene, xylylene, naphthylene, cyclopentylene, 1,5,5-trimethylcyclohexylene-1,3; cyclohexylene-1,4; 1,4-bis(methylene)cyclohexylene, the radical of 4,4'-bicyclohexylmethane or a group of formula III 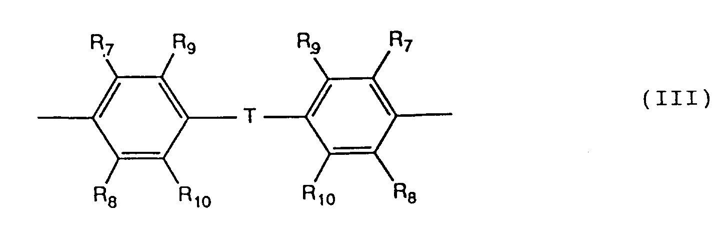 wherein R₇ and R₈ are identical or different and each is hydrogen or C₁-C₄alkyl, each of R₉ and R₁₀, independently of the other, is a hydrogen or halogen atom, and T is methylene, 2,2-propylidene, -CO-, -O-, -S- or -SO₂-.

3. A composition according to claim 1 comprising a compound of formula I wherein R₁, R₂, R₃ and R₄ are hydrogen.

4. A composition according to claim 1 comprising a compound of formula I wherein X is hexamethylene, trimethylhexamethylene, 1,5,5-trimethylcyclohexylene-1,3; the radical of 4,4'-bicyclohexylmethane or a group of formula III wherein T is methylene, 2,2-propylidene, -O-or -S-.

5. A composition according to claim 1 comprising a compound of formula I wherein R₁, R₂, R₃ and R₄ are hydrogen and X is a group of formula III wherein R₇ and R₈ are identical or different and each is hydrogen, methyl or ethyl, R₉ and R₁₀ are hydrogen and T is methylene.

6. A composition according to claim 1 comprising a compound of formula II wherein R₅ and R₆ are methyl and Y is hydrogen or an allyl radical.

7. A composition according to claim 1 comprising, per mole of component A, from 0.027 to 1.15 mol, preferably from 0.045 to 0.9 mol, of component B.

8. A composition according to claim 1 further comprising an alkenylphenol of formula IV, V or VI 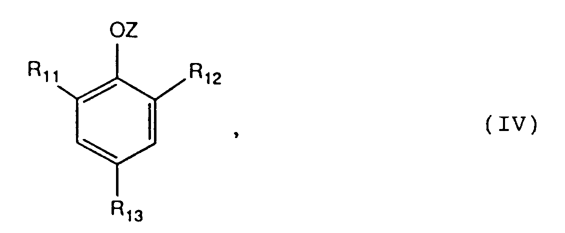 wherein each of R₁₁, R₁₂ and R₁₃, independently of the others, is a hydrogen atom or a C₃-C₁₀alkenyl group, at least one of the radicals R₁₁ to R₁₃ being an alkenyl group, and Z is hydrogen, C₁-C₁₀alkyl, C₆-C₁₀aryl or C₃-C₁₀alkenyl, 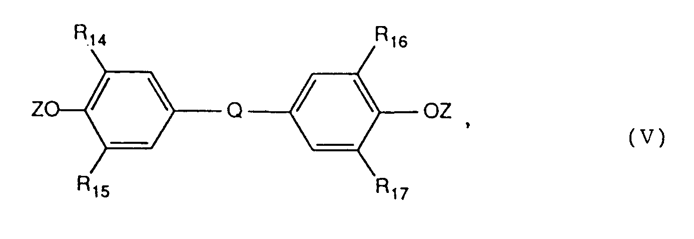 wherein Q is a direct bond, methylene, 2,2-propylidene, -CO-, -O-, -S-, -SO- or -SO₂-, and each of R₁₄, R₁₅, R₁₆ and R₁₇, independently of the others, is a hydrogen atom or a C₃-C₁₀alkenyl group, at least one of the radicals R₁₄ to R₁₇ being an alkenyl group, and Z is hydrogen, C₁-C₁₀alkyl, C₆-C₁₀aryl or C₃-C₁₀alkenyl, or 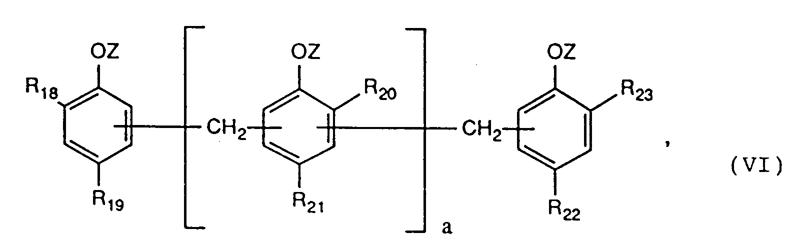 wherein each of R₁₈, R₁₉, R₂₀, R₂₁, R₂₂ and R₂₃, independently of the others, is a hydrogen atom, C₁-C₄alkyl or C₃-C₁₀alkenyl, at least one of the radicals R₁₈ to R₂₃ being an alkenyl group, and a is a number from 0 to 10, and Z is hydrogen, C₁-C₁₀alkyl, C₆-C₁₀aryl or C₃-C₁₀alkenyl.

9. A composition according to claim 8 wherein, in the formulae IV to VI, the alkenyl group is an allyl, methallyl or 1-propenyl group.

10. A composition according to claim 8 comprising an alkenylphenol of formula V wherein Q is methylene, 2,2-propylidene, -O-, -S-, -CO- or -SO₂-, each of R₁₄ and R₁₆ is an allyl radical and each of R₁₅ and R₁₇ is a hydrogen atom, and Z is hydrogen.

11. A composition according to claim 8 comprising an alkenylphenol of formula V wherein Q is 2,2-propylidene, each of R₁₄ and R₁₆ is an allyl radical and each of R₁₅ and R₁₇ is a hydrogen atom, and Z is hydrogen.

12. A composition according to claim 8 comprising, per mole of alkenylphenol, from 0.1 to 2 mol, preferably from 0.2 to 0.5 mol, of component B.

13. A process for the preparation of hardened products using a composition according to claim 1.

## Revendications

1. Compositions contenant :
A) des composés de formule I 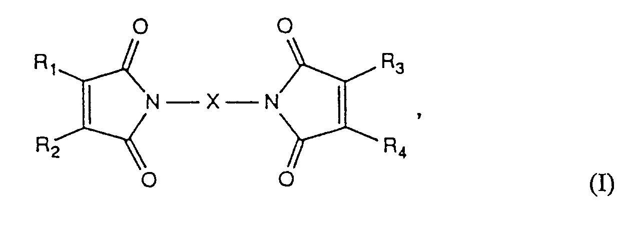 dans laquelle R₁, R₂,R₃ et R₄ sont identiques ou différents et représentent chacun un atome d'hydrogène ou un groupe méthyle, et X représente un reste organique divalent comportant 2 à 60 atomes de carbone), et
B) des composés de formule II 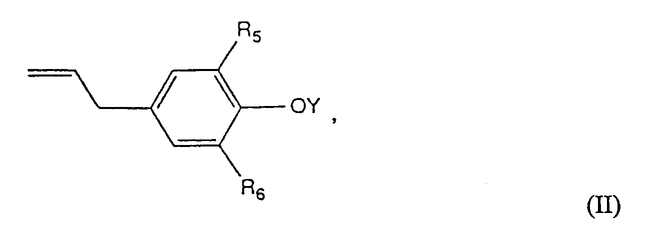 dans laquelle R₅ et R₆ sont identiques ou différents et représentent chacun, indépendamment l'un de l'autre, un groupe alkyle en C₁ à C₈ et Y représente un atome d'hydrogène ou un reste allyle .

2. Compositions selon la revendication 1, contenant des composés de formule I, dans laquelle X représente -(CH₂)ₚ- avec p valant 2 à 20, un groupe phénylène, xylylène, naphtylène, cyclopentylène, 1,5,5-triméthylcyclohexylène-1,3; cyclohexylène-1,4; 1,4-bis (méthylène)-cyclohexylène, le reste du 4,4'-bicylohexylméthane ou un groupe de formule III 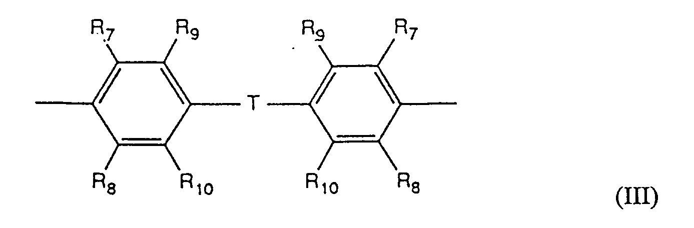 dans laquelle R₇ et R₈ sont identiques ou différents et représentent chacun un atome d'hydrogène ou un groupe alkyle en C₁ à C₄; R₉ et R₁₀ représentent chacun, indépendamment l'un de l'autre, un atome d'hydrogène ou un atome d'halogène; et T représente un groupe méthylène, 2,2-propylidène, -CO-, -O- -S- ou un -SO₂.

3. Compositions selon la revendication 1, contenant des composés de formule I, dans laquelle les symboles R₁, R₂,R₃ et R₄ représentent chacun un atome d'hydrogène.

4. Compositions selon la revendication 1, contenant des composés de formule I, dans laquelle X représente un groupe hexaméthylène, triméthylhexaméthylène, 1,5,5-triméthylcyclohexylène-1,3; le reste du 4,4'-bicyclohexylméthane ou un groupe III, dans laquelle T représente un groupe méthylène, 2,2-propylidène, -O- ou -S-.

5. Compositions selon la revendication 1, contenant des composés de formule I, dans laquelle R₁, R₂,R₃ et R₄ représentent chacun un atome d'hydrogène et X représente un groupe de formule III, dans laquelle R₇ et R₈ sont identiques ou différents et représentent chacun un atome d'hydrogène, un groupe méthyle ou éthyle; R₉ et R₁₀ représentent chacun un atome d'hydrogène et T représente un groupe méthylène.

6. Compositions selon la revendication 1, contenant des composés de formule II, dans laquelle R₅ et R₆ représentent chacun un groupe méthyle et Y représente un atome d'hydrogène ou un reste allyle.

7. Compositions selon la revendication 1, dans lesquelles, par mole du composant A, la composition contient 0,027 à 1,15 mole, avantageusement 0,045 à 0,9 mole du composant B.

8. Compositions selon la revendication 1, contenant en outre dees alcénylphénols de formule IV, V, ou VI 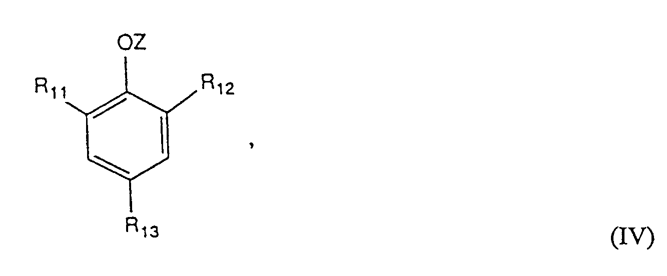 [formule dans laquelle R₁₁, R₁₂ et R₁₃ représentent chacun, indépendamment l'un de l'autre, un atome d'hydrogène ou un groupe alcényle en C₃ à C₁₀, au moins l'un des restes R₁₁ à R₁₃ représentant un groupe alcényle;et Z représente un atome d'hydrogène, un groupe alkyle en C₁ à C₁₀, aryle en C₆ à C₁₀ ou alcényle en C₃ à C₁₀). 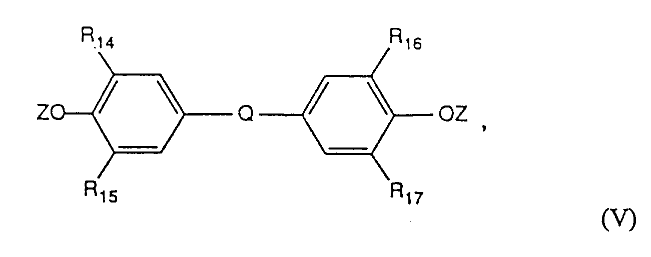 [formule dans laquelle Q représente une liaison directe, un groupe méthylène, 2,2-propylidène, -CO-, -O-, -S-, -SO- ou -SO₂, et R₁₄, R₁₅ et R₁₆ et R₁₇ représentent chacun, indépendamment l'un de l'autre, un atome d'hydrogène ou un groupe alcényle en C₃ à C₁₀, l'un au moins des restes R₁₄ à R₁₇ représentant un groupe alcényle; et Z représente un atome d'hydrogène, un groupe alkyle en C₁ à C₁₀ , aryle en C₆ à C₁₀ ou alcényle en C₃ à C₁₀], ou 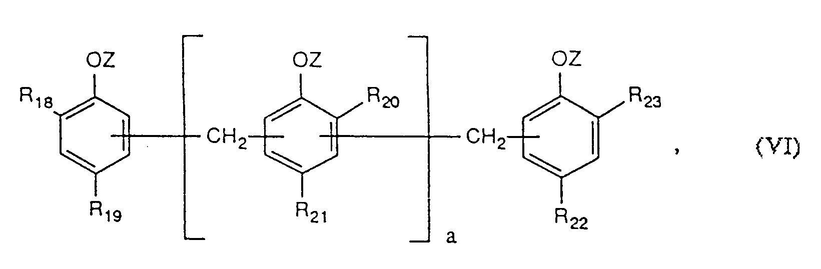 [formule dans laquelle , R₁₈, R₁₉, R₂₀, R₂₁, R₂₂ et R₂₃ représentent chacun, indépendamment l'un de l'autre, un atome d'hydrogène, un groupe alkyle en C₁ à C₄ ou alcényle en C₃ à C₁₀, l'un au moins des restes R₁₈ à R₂₃ représentant un groupe alcényle; et a est un nombre valant 0 à 10; et Z représente un atome d'hydrogène, un groupe alkyle en C₁ à C₁₀, aryle en C₆ à C₁₀ ou alcényle en C₃ à C₁₀].

9. Compositions selon la revendication 8, dans lesquelles les formules IV à VI, le groupe alcényle est un groupe allyle, méthallyle ou 1-propényle.

10. Compositions selon la revendication 8, contenant un alcénylphénol de formule V, dans lauelle Q représente un groupe méthylène, 2,2-propylidène, -O-, -S-, -SO-, ou SO₂-, R₁₄ et R₁₆ représentent chacun un groupe allyle et R₁₅ et R₁₇ représentent chacun un atome d'hydrogène, et Z représente un atome d'hydrogène.

11. Compositions selon la revendication 8, contenant des alcénylphénols de formule V, dans laquelle Q représente un groupe 2,2-propylidène, R₁₄ et R₁₆ représentent chacun un groupe allyle et R₁₅ et R₁₇ représentent chacun un atome d'hydrogène, et Z représente un atome d'hydrogène.

12. Compositions selon la revendication 8, dans lesquelles par mole d'alcénylphénol, il y a 0,1 à 2 moles, de préférence 0,2 à 0,5 mole, du composant B.

13. Procédé de préparation de produits durcis, par utilisation des compositions selon la revendication 1.
